# EUROPEAN PATENT SPECIFICATION

(11) **EP 1 160 118 B1**
(45) Date of publication and mention of the grant of the patent: **17.08.2005**
(21) Application number: 01113404.6
(22) Date of filing: 01.06.2001
(51) Int. Cl.: B60K 41/14

(54) **Integrated control apparatus provided with internal combustion engine and continuously variable transmission**
Integrierte Steuervorrichtung für Verbrennungsmotor und stufenloses Getriebe
Dispositif de commande integré pour moteur à combustion interne et transmission à variation continue

(30) Priority: 02.06.2000 JP 2000166766
(43) Date of publication of application: 05.12.2001
(73) Proprietor: Toyota Jidosha Kabushiki Kaisha, Toyota-shi, Aichi-ken 471-8571 (JP)
(72) Inventor: Ito, Yasushi, Toyota-shi, Aichi-ken, 471-8571 (JP)
(74) Representative: Leson, Thomas Johannes Alois, Dipl.-Ing.

(56) References cited:
- DE-A- 19 713 460
- DE-A- 19 942 446

## Description

### BACKGROUND OF THE INVENTION

### 1.Field of the Invention

The invention relates to an integrated control apparatus for controlling integrally an internal combustion engine and a continuously variable transmission connected to the output side of the internal combustion engine.

### 2.Description of the Related Art

It is well known that the driving power characteristic of the internal combustion engine such as a gasoline engine does not coincide with a driving power characteristic requested for a vehicle completely. Thus, a transmission is disposed on the output side of an internal combustion engine so as to change transmission gear ratio of the transmission appropriately depending on a request condition for the driving power and vehicle velocity. As a transmission for that purpose, a continuously variable transmission capable of changing the transmission gear ratio continuously is used.

Because the continuously variable transmission is capable of setting a transmission gear ratio continuously without steps, changes of the driving torque and braking torque (engine braking torque) accompanied by changing of the transmission gear ratio become continuous, so that the driving torque and the braking torque can be set up appropriately. According to the invention disclosed in Japanese Patent Application No. 11-230322, for example, a transmission gear ratio when an accelerator pedal is released is set appropriately based on a traveling environment and driving condition of the vehicle or a road condition so as to secure a driver's intended engine brake characteristic.

An advantage that the transmission gear ratio can be set up continuously without steps by means of the continuously variable transmission is that the engine speed can be controlled with the transmission as well as that the engine brake force can be set up appropriately as described above. As a result, the engine can be driven at an optimum operating point in which fuel consumption of fuel is minimized by setting the transmission gear ratio appropriately while satisfying a requested driving power by controlling the amount of air and further, an arbitrary engine speed can be set up.

Using such a characteristic, improvement of fuel efficiency has been tried by carrying out fuel-cut control in which a supply of fuel to the engine is stopped for as long a period as possible while maintaining the engine speed higher than a predetermined speed at the time of deceleration of the vehicle. According to a style of that control, when the accelerator pedal is returned so that the engine goes into idling state, if the engine speed is higher than a fuel-cut speed, the supply of fuel is stopped and the transmission gear ratio is fixed at a transmission gear ratio at that time. If, with a drop of the vehicle speed, the engine speed approaches a speed (fuel-cut restoration speed), which stops the fuel-cut control, the transmission gear ratio is increased so as to keep the engine speed higher than the fuel-cut restoration speed. Because in such a control, a transmission gear ratio at the time when the accelerator pedal is returned is maintained initially, the engine brake force is never changed immediately after the vehicle states to decelerate.

However, because, if with the drop of the vehicle speed, the engine speed approaches the fuel-cut restoration speed, the engine speed is maintained higher than the fuel-cut restoration speed, the transmission gear ratio is increased with the drop of the vehicle speed. Because the engine brake force at the time of deceleration of the vehicle is a product of engine torque and transmission gear ratio, if the transmission gear ratio is increased without changing the operating condition of the engine, the engine brake force is increased. As a result, the degree of deceleration, which a driver feels, is intensified so that the driver feels a sense of discomfort.

Document DE-A-197 13 460 discloses a control system with all the features of the preamble of independent claim 1. The control system controls the engine rotation in a manner, that the engine rotation is controlled in accordance with the throttle valve opening angle and the vehicle velocity in order to achieve a target engine rotation. To reduce pumping loss different kinds of valves are kept open when the engine is in a fuel-cut state in order to supply further air to the cylinder and to reduce negative pressure caused by the idled throttle valve.

### SUMMARY OF THE INVENTION

The invention has been achieved by paying attention to the above described technical problem and therefore, an object of the invention is to provide an integrated control apparatus for the internal combustion engine and the continuously variable transmission capable of preventing a rapid increase of brake force while maintaining the speed of the internal combustion engine relatively high.

The feature of the invention is that if the transmission gear ratio is changed, a torque applied to the driving power transmission system is changed depending on a change of the transmission gear ratio while maintaining an engagement condition and slippage condition of a lock-up clutch without changing the engagement condition, so as to achieve the above described object.

In a first aspect of the invention, there is provided an internal combustion engine and a continuously variable transmission in which a driving power transmission system containing the continuously variable transmission for transmitting a driving power outputted by the internal combustion engine to a driving wheel is coupled on an output side of the internal combustion engine capable of changing an opening/closing timing of an intake valve. The integrated control apparatus further comprises intake valve closing timing control means for changing a valve closing timing of the intake valve in accordance with a change of the transmission gear ratio of the continuously variable transmission.

Therefore, according to the first aspect of the invention, the speed of the internal combustion engine is controlled by changing the transmission gear ratio, and at the same time, the valve closing timing of the intake valve is controlled so that the suction air amount into the internal combustion engine or an output torque is controlled. Because the speed of the internal combustion engine and the output torque are controlled separately, the speed of the internal combustion engine at the time of deceleration of the vehicle can be controlled to be higher than a predetermined speed, and a pumping loss thereof and an excessive braking force generated thereby can be suppressed.

The driving power transmission system of the first aspect of the invention comprises a lock-up clutch for selectively coupling an input side member of a fluid transmission mechanism or an output side member thereof, and the intake valve closing timing control means changes a valve closing timing of the intake valve when the vehicle is in a decelerating state with the lock-up clutch engaged and a supply of fuel to the internal combustion engine is stopped.

Consequently, because the lock-up clutch is engaged completely or in a condition, which may generate a specified slippage at the time of deceleration of the vehicle, a traveling inertial force of the vehicle is transmitted favorably to the internal combustion engine so that the internal combustion engine is forced to rotate. With this state, the transmission gear ratio of the continuously variable transmission is changed so as to set the speed of the internal combustion engine higher than a predetermined speed, so that a supply of fuel is kept stopped. Because the valve closing timing of the intake timing is changed at the same time, a pumping loss of the internal combustion engine and a braking force accompanied thereby are suppressed.

In a second aspect of the invention, there is provided operating members, coupled to the internal combustion engine, for receiving a torque of the internal combustion engine. The integrated control apparatus further comprises torque adjusting means for changing a torque which operating members receive from the internal combustion engine in accordance with a change of a transmission gear ratio of the continuously variable transmission.

Therefore, according to the second aspect of the invention, because the internal combustion engine and the driving wheel are coupled by the driving power transmitting system and the transmission gear ratio of the continuously variable transmission is changed with that condition, if the vehicle speed drops, for example, the transmission gear ratio is increased so as to maintain the speed of the internal combustion engine higher than a predetermined value. In this case, a torque which the operating member receives from the internal combustion engine is changed. That is, the transmission gear ratio of the continuously variable transmission is changed so as to control the speed of the internal combustion engine, and at the same time the torque between the internal combustion engine and the driving wheel is controlled. As a result, the braking force expressed with a product of the torque of the internal combustion engine and the transmission gear ratio at the time of deceleration of the vehicle can be controlled while maintaining the speed of the internal combustion engine higher than a predetermined speed.

The operating member of the second aspect of the invention may include a variable capacity compressor and the torque adjusting means may change an exhaust amount of the variable capacity compressor in accordance with a change of the transmission gear ratio.

Consequently, the exhaust amount of the variable capacity type compressor is changed in accordance with a change of the transmission gear ratio. Thus, the torque between the internal combustion engine and the driving wheel can be suppressed while controlling the speed of the internal combustion engine at a relatively high speed.

### BRIEF DESCRIPTION OF THE DRAWINGS

Fig. 1 is a flow chart showing an example of control according to the invention;
Fig. 2 is a time chart schematically showing a change of engine brake force when a control of Fig. 1 is carried out;
Fig. 3 is a flow chart showing another example of control according to the invention;
Fig. 4 is a flow chart showing still another example of control according to the invention;
Fig. 5 is a diagram schematically showing a relation between a transmission gear ratio and a driving torque of air conditioner compressor when a control shown in Fig. 4 is carried out;
Fig. 6 is a diagram schematically showing an example of driving power system of a vehicle provided with an internal combustion engine according to the invention; and
Fig. 7 is a diagram schematically showing a connection between air feed/discharge system and accessories of this internal combustion engine.

### DETAILED DESCRIPTION OF THE PREFERRED EMBODIMENTS

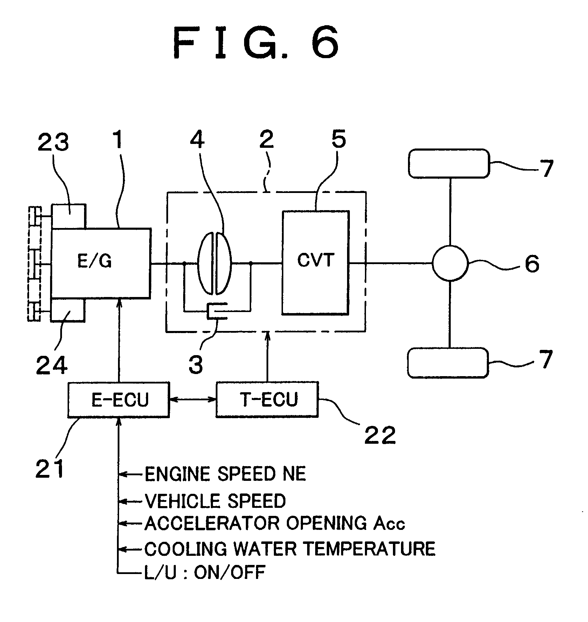

The invention will be described with reference to embodiments. An internal combustion engine of the invention is a drive unit such as a gasoline engine and diesel engine for outputting a driving power by burning fuel and an example thereof is an internal combustion engine loaded on a vehicle and used for mainly a driving power source. Fig. 6 shows schematically a driving power system using the internal combustion engine (engine: E/G) 1 as a driving power source of the vehicle, in which an output shaft of the internal combustion engine 1 is coupled to a transmission 2.

In the transmission 2 shown here, a transmission mechanism is coupled to a fluid type driving mechanism. The fluid type driving mechanism is constructed with a torque converter 4 containing a lock-up clutch 3 as an example. That is, the torque converter 4 is so constructed that a turbine runner is rotated by providing a turbine runner with oil whirl generated by a pump impeller and a flow direction of oil coming back from the turbine runner to the pump impeller is controlled by a stator, so as to transmit a torque through oil. On the other hand, the lock-up clutch 3 is provided between a member on the input side to which the pump impeller is coupled and a member on the output side to which the turbine runner is connected, so that input element and output element are engaged mechanically by friction force so as to transmit a torque. Control of this engagement and release is carried out with hydraulic pressure, as an example.

Therefore, although the torque is transmitted through the torque converter 4 with the lock-up clutch 3 released, an unavoidable slippage occurs because the torque converter 4 is so constructed to transmit the torque through fluid, so that torque transmission efficiency never reaches 100%. On the other hand, because the lock-up clutch 3 is constructed to be mechanically engaged to transmit a torque, when it is engaged completely, the torque transmission efficiency reaches substantially 100%, which is a higher torque transmission efficiency than the torque transmission efficiency through the torque converter 4. That is, the torque transmission efficiency is changed higher or lower depending on the engagement/release condition of the lock-up clutch 3.

The transmission mechanism is a mechanism that is operated by a human operating force or a driving force of an actuator controlled electrically so as to change transmission gear ratio and can employ belt-type or toroidal type continuously variable transmission mechanism or gear type stepped transmission mechanism. In an example shown in the same figure, the continuously variable transmission mechanism (CVT) 5 is employed, in which its transmission gear ratio changes continuously so that an output torque accompanied by that transmission is smoothed and thus, until the speed of the internal combustion engine 1 is reduced to a quite low speed, the lock-up clutch 3 can be maintained in the engagement condition. The output shaft of the transmission 2 is coupled to right and left driving shafts 7 through a propeller shaft and a final reduction gear 6.

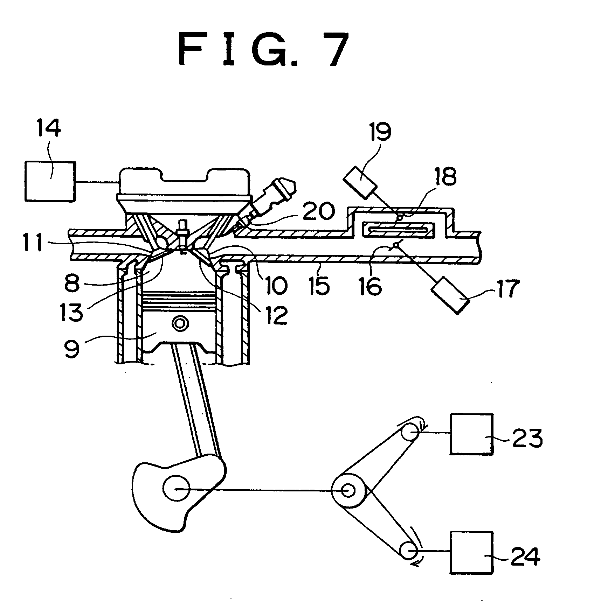

As the aforementioned internal combustion engine 1, a reciprocation type engine is most generally used. The engine shown in the same figure is so constructed so as to be capable of controlling supply/stop of fuel, suction air amount, valve timing and driving torque of accessories. This engine is provided with a piston 9, which moves up and down inside a cylinder 8, as shown in Fig. 7. An intake port 10 and an exhaust port 11 are provided on the top of the cylinder 8. The intake port 10 is opened/closed by an intake valve 12 and the exhaust port 11 is opened/closed by an exhaust valve 13. The intake valve 12 and the exhaust valve 13 are so constructed to be opened/closed interlockingly with the piston 9 depending on a rotation angle of the crankshaft (not shown).

A variable valve timing mechanism (VVT) 14 is provided for controlling its opening/closing timing, particularly an opening/closing timing of the intake valve 12 so as to make it relatively delayed or advanced. As an example, the opening/closing timing is advanced or delayed by changing a mounting phase of a cam (not shown) pressing the aforementioned valves 12, 13 onto a cam shaft (not shown) or changing a relative phase between the cam shaft and a pulley (not shown) for driving this cam shaft.

In halfway of an air suction pipe 15 communicating with the intake valve 12, a throttle valve 16 for controlling the suction amount is disposed. This throttle valve 16 is a valve for changing the opening depending on a requirement for acceleration or deceleration through accelerator operation and in an example shown in Fig. 7, the throttle valve 16, which is opened or closed by an actuator 17 controlled electrically, is employed. Therefore, in the example shown here, the opening of the throttle can be controlled not based on the accelerator operation, for example, idle rotation number (idle speed) can be controlled by the throttle valve 16.

If the throttle valve is so constructed as to be opened or closed depending on only the accelerator operation, it is possible to provide with an idle speed control valve (ISC valve) 18 which controls the amount of air to be sucked through that throttle valve. In that case, it is possible to control the opening of the ISC valve 18 with an actuator 19 of a motor or the like so as to electrically control the suction air amount. Further, a fuel injector 20 is provided near the aforementioned intake port 12 so as to inject fuel to sucked air generating fuel-air mixture.

Further, the internal combustion engine 1 is provided with an electronic control unit (E-ECU) 21 for controlling the opening/closing timing of the intake valve 12 or the exhaust valve 13, the opening of the throttle valve 16, the opening of the ISC valve 18, the amount of fuel injection by the fuel injector 20, execution and stop of the injection and ignition timing. This electronic control unit 21 is constructed of mainly a microcomputer and computes using inputted data or preliminarily stored data so as to output a predetermined control instruction signal. This electronic control unit 21 stores an engine speed NE of the internal combustion engine 1, vehicle speed, accelerator opening (accelerator pedal depression amount (not shown)), cooling water temperature of Acc and the internal combustion engine 1 and signal of the engagement/release (ON/OFF) of the lockup clutch (L/U) 3.

Further, an electronic control unit (T-ECU) 22 for the transmission for controlling the engagement/release of the lock-up clutch 3 in the aforementioned transmission 2 and transmission gear ratio to be set up by the continuously variable transmission mechanism 5 is provided. This electronic control unit 22 is constructed of mainly a microcomputer and computes using inputted data or preliminarily stored data so as to output a predetermined control instruction signal to the transmission 2. More specifically, a transmission gear ratio and control signal of the engagement/release of the lockup clutch 3 are outputted based on a requested driving amount indicated by the accelerator opening or a driving condition indicated by the vehicle speed. Meanwhile, these electronic control units 21, 22 are connected to each other so as to be capable of carrying out data communication.

Accessories such as an air conditioner compressor 23 and an alternator 24 are coupled to the output shaft (crankshaft) of the internal combustion engine 1 through a wrapping transmission mechanism such as a belt. These accessories are driven as required and a driving power transmission system for the aforementioned air conditioner compressor is provided with a clutch (not shown), so that when a request for cooling a vehicle compartment arises, the clutch is engaged to transmit an output torque of the internal combustion engine 1 to the air conditioner compressor 23 and drive it. If a variable capacity type air conditioner compressor 23 is used, that capacity is changed depending on a cooling requirement amount. Therefore, by driving these accessories to change the driving torque, a torque directed from the internal combustion engine 1 to a driving wheel 7 is increased or decreased. In the meantime, an electronic control unit (not shown) for controlling the accessory is provided and connected to the above described respective electronic control units 21, 22 so as to be capable of carrying out data communication.

A system for carrying out fuel-cut control for stopping a supply of fuel temporarily by establishing a predetermined condition during a traveling in order to reduce the amount of fuel to be consumed in the internal combustion engine 1 is provided. This fuel-cut control is a control for stopping the supply of fuel to the internal combustion engine 1 when the engine is decelerating at a speed higher than a predetermined one, which allows the internal combustion engine 1 to rotate by itself by starting the supply of fuel. Therefore, execution conditions for that control are that warm-up is completed, an accelerator pedal has been returned (released) and the speed of the internal combustion engine 1 is higher than a predetermined restoration speed.

After deceleration is started, in order to stop the supply of fuel for as long a time as possible, generally, the aforementioned lock-up clutch 3 is maintained in a complete engagement or in a slippage condition ensuring a low slip speed so that a torque transmission capacity thereof is relatively increased and further, by increasing the transmission gear ratio relatively, the speed of the internal combustion engine of a low speed vehicle is set high. Further, because such a transmission system as belt-type continuously variable transmission and traction type (toroidal type) continuously variable transmission is so constructed that the transmission gear ratio is changed with an input side member and an output side member thereof being rotated, if a vehicle is intended to be stopped after deceleration from a predetermined vehicle speed, it needs to reach a maximum transmission gear ratio (or transmission gear ratio for start-up) aiming for a next start-up when it is stopped. Therefore, in a vehicle provided with the continuously variable transmission, it is necessary to carry out transmission control for increasing the transmission gear ratio in a process in which it is decelerated and stopped.

If the transmission gear ratio is increased during deceleration, a torque by pumping loss of the internal combustion engine 1 is increased corresponding to the transmission gear ratio so that a braking force caused by the increase of the transmission gear ratio may be increased. The integrated control apparatus of the invention composed of mainly an electronic control unit which controls the aforementioned electronic control unit 21 for the internal combustion engine 1 and accessories such as the air conditioner compressor 23 is so constructed that a following control is carried out when the transmission gear ratio is changed by the continuously variable transmission mechanism 5.

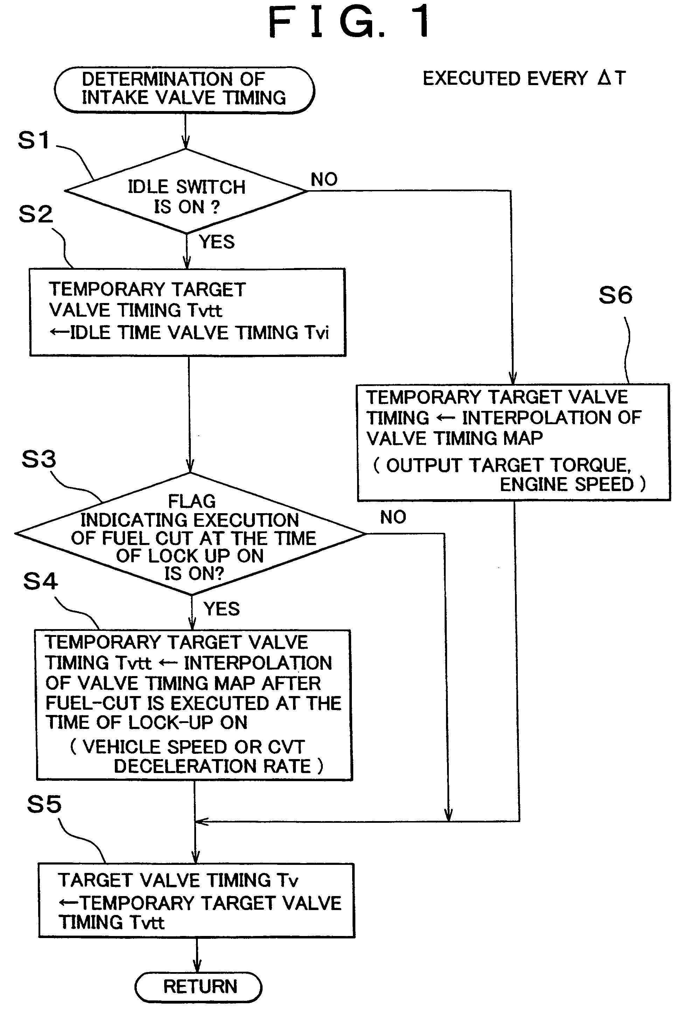

Fig. 1 shows an example of that control with a flow chart and routines indicated here are carried out every predetermined time (several tens of micro seconds) Δt and first, whether or not the idle switch is ON is determined (step S1). This idle switch is turned ON when the accelerator pedal is returned or its depression amount becomes zero and therefore, in step S1, whether or not idling state is provided is determined.

If a positive determination is made because the idle switch is ON in step S1, idle time valve timing Tvi is set up as a temporary target valve timing Tvtt (step S2). This idle time valve timing Tvi is a timing determined preliminarily based on a relation with a crank angle or a stroke position of the piston 9.

Next, whether or not a flag is ON for indicating that the fuel-cut control is being carried out with the lock-up clutch 3 engaged (flag indicating execution of fuel cut at the time of lock up ON) is determined (step S3). If the speed of the internal combustion engine 1 is kept to be a higher than a predetermined speed with the lock-up clutch 3 engaged at the time of deceleration with warm-up completed as described above, the fuel-cut control for stopping the supply of fuel to the internal combustion engine 1 is carried out. This state can be determined based on a control state of the electronic control unit 21 of the internal combustion engine 1 and the electronic control unit 22 for the transmission and the flag is set ON or OFF depending on its determination result.

If the fuel-cut control is carried out with the lock-up clutch 3 ON so that the aforementioned flag is ON or a positive determination is made in step S3, a valve timing map interpolation value is set up after the fuel cut is carried out when the lock up based on a vehicle speed or a transmission gear ratio set by the continuously variable transmission mechanism 5 is turned ON (step S4). A valve timing set up in this manner is a valve closing timing of the intake valve 12 which decreases a substantial suction air amount with respect to the cylinder 8 depending on a drop of the vehicle speed or a transmission gear ratio increased correspondingly. More specifically, if the aforementioned variable valve timing mechanism 14 is so constructed as to adjust the valve closing timing after a bottom dead center, in step S4, the valve closing timing is delayed corresponding to a drop of the vehicle speed or an increase of the transmission gear ratio. If the variable valve timing mechanism 14 is so constructed as to adjust the valve closing timing before the bottom dead center, in step S4, the valve closing timing is set up to be hastened corresponding to the drop of the vehicle speed or the increase of the transmission gear ratio.

Therefore, in the former case, part of air sucked into the cylinder 8 temporarily is returned from the intake port 10 by a lift of the piston 9 and discharged. Therefore, the amount of air sucked substantially into the cylinder 8 is reduced. In the latter case, because the intake valve 12 is closed at an early timing before the piston 9 reaches its bottom dead center so as to interrupt suction of air halfway, the amount of air sucked into the cylinder 8 is restricted and reduced.

The temporary target valve timing Tvtt set in the above manner is set up as a target valve timing Tvt (step S5) and the variable valve timing mechanism 14 is controlled so that an actual valve closing timing of the intake valve 12 coincides with the target valve timing Tvt. Therefore, in the former case in which the valve closing timing of the intake valve 12 is delayed, part of air sucked into the cylinder 8 temporarily is pushed back from the intake port 10 due to a lift of the piston 9 and discharged, a negative pressure in the air suction pipe is reduced. In the latter case in which the valve closing timing of the intake valve 12 is advanced, the suction of air is interrupted halfway so that the negative pressure in the air suction pipe is decreased. Consequently, a negative loss by the pumping loss is decreased. That is, because the output torque of the internal combustion engine 1 is relatively increased, an excessive increase of the braking force is prevented even if a drop of the speed of the internal combustion engine 1 is suppressed by decreasing the vehicle speed or increasing the transmission gear ratio.

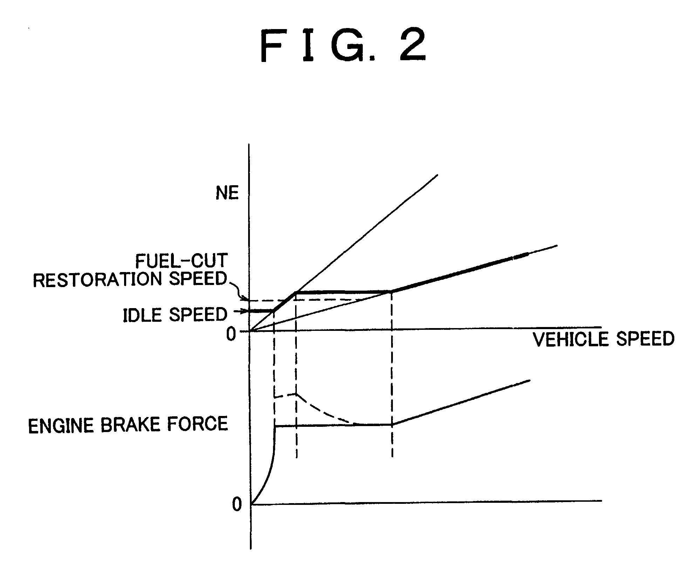

This will be described with reference to a diagram shown in Fig. 2. If an accelerator opening is decreased during a traveling at an intermediate to high speed, the transmission gear ratio to be set up based on a traveling condition that is determined depending on the accelerator opening or vehicle speed is set up to a transmission gear ratio on the side of a high vehicle speed, so that in a state in which the accelerator is OFF (in a state in which the internal combustion engine 1 is idling), a transmission gear ratio on the side of the highest vehicle speed is achieved. Therefore, in deceleration accompanied by accelerator off, as indicated with a bold solid line in Fig. 2, the vehicle speed drops gradually with the transmission gear ratio on the side of the highest vehicle speed set up. In this case, if with the aforementioned lock-up clutch 3 engaged completely or under a relatively high engagement force, the torque transmission capacity of the driving power transmission system is high, the engine speed NE of the internal combustion engine 1 drops accompanied by accelerator off and subsequent drop of the vehicle speed.

If such a condition as a sufficient warm-up of the internal combustion engine 1 is established during the deceleration, the fuel-cut control is carried out. Then, because if the engine speed NE of the internal combustion engine 1 reaches a fuel-cut restoration speed (engine speed for restarting the supply of fuel), the drop of the engine speed NE of the internal combustion engine 1 is limited so as to keep the engine speed NE higher than the fuel-cut restoration speed, the transmission gear ratio is changed to the side of the low vehicle speed. Finally, the transmission gear ratio is increased up to a transmission gear ratio (maximum transmission gear ratio) on the side of the lowest vehicle speed that the mechanism allows. After that, with a drop of the vehicle speed, the speed of the internal combustion engine 1 is decreased and when the fuel-cut restoration speed is reached, the supply of fuel is restarted and then an idling speed is maintained.

In a process in which a vehicle speed or a engine speed NE of the internal combustion engine 1 at the time of deceleration is changing, an engine brake force generated in a decelerating state with the transmission gear ratio kept at the minimum transmission ratio (transmission gear ratio on the side of the highest vehicle speed) decreases with a drop of the speed of the internal combustion engine 1 accompanied by a drop of the vehicle speed. On the contrary, if the transmission gear ratio is increased, after that, so as to maintain the engine speed NE of the internal combustion engine 1 at an engine speed higher than the fuel-cut restoration speed, in the integrated control apparatus of the invention for carrying out a control shown in Fig. 1, the valve closing timing of the intake valve 12 is changed so that a substantial suction air amount into the cylinder 8 is decreased. Thus, even if the engine speed NE of the internal combustion engine 1 is not decreased, the pumping loss and a braking torque accompanied thereby are also decreased, suppressing a relative increase of the braking torque. Consequently, a natural deceleration feeling can be obtained. This is indicated with a solid line of Fig. 2. On the other hand, if the above described control of the suction air amount or reduction control of the pumping loss is not carried out, the braking torque is relatively increased as indicated by a dotted line in Fig. 2, which leads to a sense of discomfort.

If a negative determination is made in step S3 because the flag indicating execution of fuel cut at the time of lock up ON is OFF, step S4 is skipped and the processing proceeds to step S5, in which idling time valve timing Tvi is set up as a target valve timing Tvt.

This is carried out for sucking air corresponding to a supply of fuel. If a negative determination is made in step S1 because idling state is not recognized, a map value of valve timing corresponding to the output target torque or engine speed is read out and this is set up as a temporary target valve timing Tvtt (step S6), and after that, the processing proceeds to step S5.

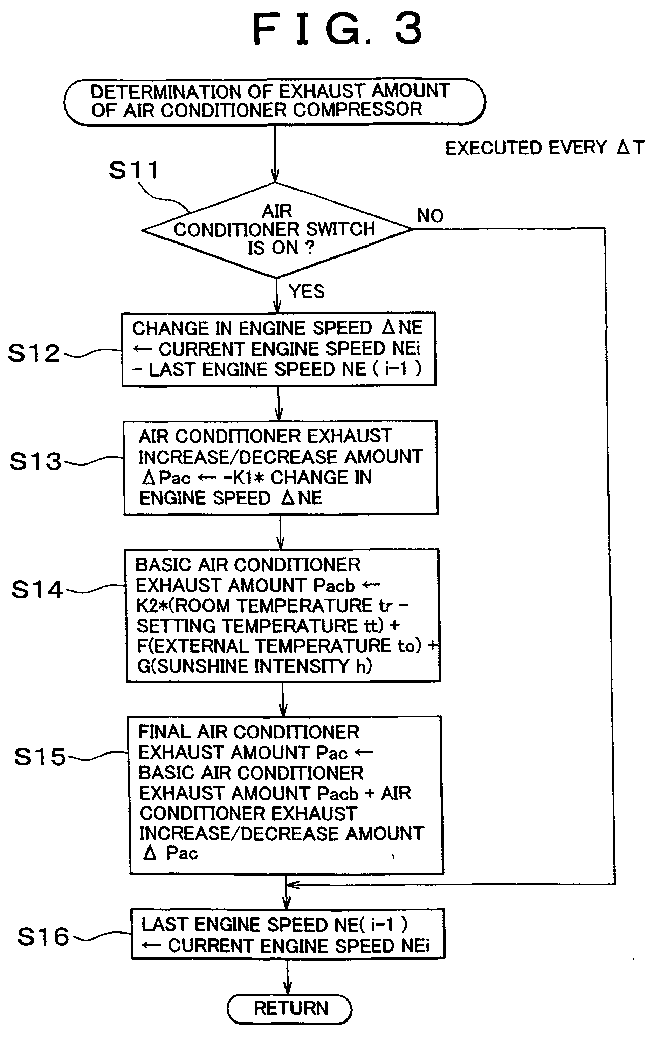

As described above, a torque outputted from the internal combustion engine 1 to the driving power transmission system can be controlled without increasing or decreasing a throttle opening and such a control is carried out when the lock-up clutch 3 is engaged for achieving deceleration. By carrying out such a control at the time of deceleration when the lock-up clutch 3 is engaged, the fuel-cut control providing with no sense of discomfort can be continued. Further, by carrying out a torque control not depending on the throttle opening for the driving power transmitting system, improvement of fuel efficiency and acceleration response can be improved. More specifically, by changing the driving torque of the accessory coupled to the internal combustion engine 1 at the time of acceleration or deceleration, part of the output torque of the internal combustion engine 1 is absorbed by the accessory or use of the output torque of the internal combustion engine 1 by the accessory is reduced. An example of that control is shown in Fig. 3 in the form of flow chart.

The example shown in Fig. 3 is an example using the air conditioner compressor 23 as an accessory, which is executed every predetermined time, Δt seconds. In this control example, first of all, whether or not the air conditioner switch is ON is determined (step S11). That is, whether or not the air conditioner compressor 23 in a vehicle compartment is activated is determined. If a positive determination is made in step S11 because the air conditioner is used, a change ΔNE of the speed of the internal combustion engine 1 (change of engine speed) is computed (step S12). That is, a difference between the engine speed NEi detected this time and an engine speed NE (i - 1)detected last time is obtained. If a result of that computation is a positive value, it means accelerating state and if it is a negative value, it means decelerating state.

Then, by multiplying that engine speed change ΔNE with a specified coefficient (-K1), an air conditioner exhaust increase/decrease amount ΔPac is computed (step S13). Because its coefficient is a negative value, an air conditioner exhaust decrease amount is computed at the time of accelerating state and conversely, an air conditioner exhaust increase amount is computed at the time of decelerating state.

A basic air conditioner exhaust amount Pacb is set up in an ordinary process (step S14). More specifically, the basic air conditioner exhaust amount Pacb is computed by summing up a value obtained by multiplying a differential between a room temperature tr and a setting temperature tt with a predetermined coefficient K2, a value F (to) determined based on an external temperature to and a value G (h) determined based on sunshine intensity. Then, by adding the aforementioned air conditioner exhaust increase/decrease amount ΔPac to this basic air conditioner exhaust amount Pacb, a final air conditioner exhaust amount Pac is obtained (step S15). Further, the engine speed NE1 of this time is updated as an engine speed NE (i - 1) of last time (step S16). Meanwhile, if a negative determination is made in step S11 because the air conditioner is not used, the processing proceeds to step S16 immediately.

Therefore, in the integrated control apparatus of the invention for carrying out the control shown in Fig. 3, if the speed of the internal combustion engine 1 is changed with a change of the transmission gear ratio of the continuously variable transmission mechanism 5, the exhaust amount of the air conditioner is updated correspondingly. More specifically, if the transmission gear ratio is changed so as to reduce the engine speed NE of the internal combustion engine 1, a torque for driving the air conditioner compressor 23 is increased. For this reason, an inertial torque upon reducing the speed of the internal combustion engine 1 is absorbed by the air conditioner compressor 23 thereby suppressing or avoiding appearance of the driving torque. As a result, a change of the driving torque at the time of deceleration is smoothed so that a natural drive feeling is secured and further, the speed of the internal combustion engine 1 is decreased so as to improve fuel efficiency.

Conversely, at the time of acceleration, a torque for driving the air conditioner compressor 23 by the internal combustion engine 1 drops. Thus, the inertial torque of the air conditioner compressor 23 is reduced when the speed of the internal combustion engine 1 is increased, so that the increase of the speed of the internal combustion engine 1 and the increase of the driving torque are enhanced. As a result, the driving torque is increased rapidly at the time of acceleration so that acceleration response is improved.

Meanwhile, the coefficient (-K1) for obtaining the air conditioner exhaust increase/decrease amount may be a constant or a vehicle speed, or a transmission gear ratio, or a value preliminarily determined depending on a change thereof.

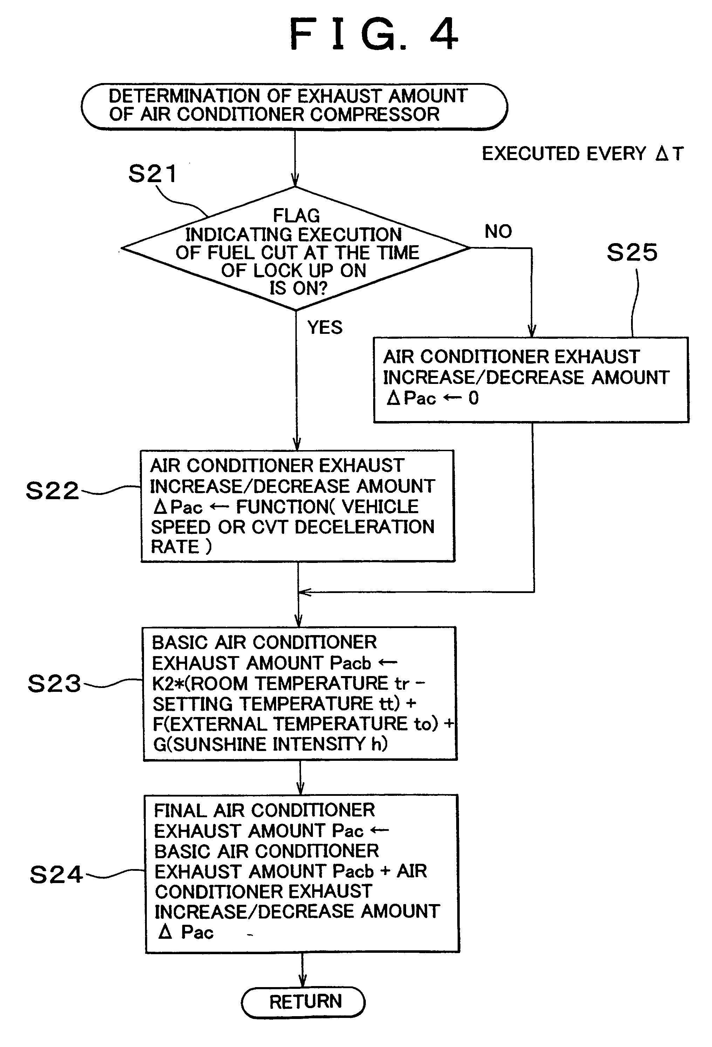

The control on the increase/decrease of the air conditioner exhaust amount can be carried out at the time of fuel-cut control as well as at the time of acceleration or deceleration, so that the engine speed NE of the internal combustion engine 1 and a torque of the driving power transmission system are controlled separately thereby improving drive feeling or drivability. That example is shown in the form of flow chart in Fig. 4.

Fig. 4 shows an example of control using a variable capacity type air conditioner compressor 23 as an accessory. A routine shown here is executed every predetermined time (several tens of micro seconds), Δt. First of all, whether or not the flag indicating execution of fuel cut at the time of lock up ON is ON is determined (step S21). This is the same determination step as step S3 shown in Fig. 1 described above. If a positive determination is made in this step S21, an air conditioner exhaust increase/decrease amount ΔPac is computed (step S22).

This computation is based on a predetermined function in which the vehicle speed or transmission gear ratio is determined as a parameter and carried out based on the function in which the air conditioner exhaust increase/decrease amount is increased in a negative direction if the vehicle speed drops or the transmission gear ratio is changed in a direction for increasing it.

The basic air conditioner exhaust amount Pacb is set up in an ordinary process (step S23). This is the same control as in step S14 shown in Fig. 3. Then, by adding the aforementioned air conditioner exhaust increase/decrease amount ΔPac to this basic air conditioner exhaust amount Pacb, a final air conditioner exhaust amount Pac is obtained (step S24). This is the same computation process as step S15 shown in Fig. 3.

Thus, according to the above described control, when the fuel-cut control is being carried out at the time of deceleration with the lock-up clutch 3 engaged, if the vehicle speed drops or the transmission gear ratio is increased so as to set the speed of the internal combustion engine 1 higher than a predetermined speed, the air conditioner exhaust increase/decrease amount ΔPac is decreased (increased in a negative direction) correspondingly. As a result, the final air conditioner exhaust amount Pac is reduced. Accompanied thereby, the driving torque of the air conditioner compressor 23 or a torque to be applied from the internal combustion engine 1 to the air conditioner compressor 23 is reduced.

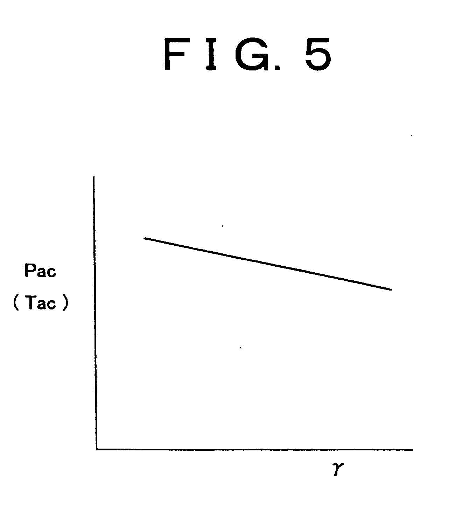

Fig. 5 shows a relation between the final air conditioner exhaust amount Pac (or driving torque Tac of the accessory) by such a control and a transmission gear ratio γ in the form of diagram. As the transmission gear ratio γ is increased, the final air conditioner exhaust amount Pac (or the driving torque Tac of the accessory) is decreased. Thus, if the vehicle speed drops or the transmission gear ratio is increased so as to set the speed of the internal combustion engine 1 higher than the predetermined speed with the drop of the vehicle speed, the pumping loss of the internal combustion engine 1 and the braking torque based thereon are increased. However, contrary to this, the driving torque of the air conditioner compressor 23 which receives a torque from the internal combustion engine 1 drops, so that reduction of the torque in the driving power transmission system between the internal combustion engine 1 and the driving wheel 7 (increase of the braking torque) is suppressed. In other words, the speed of the internal combustion engine 1 and the braking torque are controlled separately and even if the transmission gear ratio is increased under a low speed in order to continue the fuel-cut control, a relatively excessive increase of the brake force is restricted or avoided.

Meanwhile, if a negative determination is made in step S21 because the fuel-cut control is not carried out, the braking torque or the driving torque by the accessory does not have to be controlled. Therefore, the air conditioner exhaust increase/decrease ΔPac is set to "0" (step S25) and the processing proceeds to step S23.

Here, a relation between the above described embodiment and the invention will be described simply. A functional means in step S4 and step S5 shown in Fig. 1 corresponds to an intake valve timing control means mentioned in claim 1 and claim 2. Further, a functional means in step S11 to step S15 shown in Fig. 3 and a functional means in step S22 to step S25 shown in Fig. 4 correspond to torque adjusting means mentioned in claim 3 and claim 4.

Meanwhile, although an example of using the air conditioner compressor 23 as an accessory has been described, the invention is not restricted to the above-described embodiment. That is, an accessory for receiving a torque from the internal combustion engine 1 such as an alternator 24 can be used as an operating member in the invention. Further, it is permissible to control the valve closing timing of the intake valve and the driving torque of the accessory in parallel.

As described above, in the integrated control apparatus according to the first embodiment of the invention, by changing the transmission gear ratio of the transmission, the speed of the internal combustion engine is controlled and at the same time, the valve closing timing of the intake valve is controlled. As a result, the suction air amount into the internal combustion engine or the output torque is controlled. Therefore, the speed of the internal combustion engine and the output torque can be controlled separately. Consequently, while controlling the speed of the internal combustion engine higher than a predetermined speed at the time of deceleration of the vehicle, the pumping loss and the brake force caused thereby can be suppressed, so that a sense of discomfort such as a sudden generation of an excessive brake force can be avoided.

Further, according to the first embodiment, because the lock-up clutch is engaged completely or engaged in a condition, which generates a specified slippage at the time of deceleration, a traveling inertial force of a vehicle is transmitted favorably to the internal combustion engine so that the internal combustion engine is forced to be rotated. With that condition, the transmission gear ratio of the continuously variable transmission is changed so as to set the speed of the internal combustion engine higher than a predetermined speed, so that the supply of fuel is kept stopped. At the same time, the valve closing timing of the intake valve is changed. Therefore, the pumping loss of the internal combustion engine and the brake force accompanied thereby are suppressed, thereby making it possible to prevent a sense of discomfort which may be generated by a rapid increase of the brake force.

Further, according to the second embodiment of the invention, the internal combustion engine and the driving wheel are connected to each other through the driving power transmission system and with that state, the transmission gear ratio of the continuously variable transmission is changed. Thus, if the vehicle speed drops, the transmission gear ratio is increased so that the speed of the internal combustion engine is kept higher than a predetermined value. In this case, a torque which the operating member receives from the internal combustion engine is changed, so that the torque is changed between the internal combustion engine and the driving wheel. That is, the transmission gear ratio is changed so as to control the speed of the internal combustion engine and at the same time, the torque between the internal combustion engine and the driving wheel is controlled by the operating member. As a result, the brake force, which can be expressed with a product of the torque of the internal combustion engine and the transmission gear ratio at the time of deceleration of the vehicle can be controlled while maintaining the speed of the internal combustion engine higher than a predetermined speed. Then, by utilizing such a function at the time of acceleration or deceleration of the vehicle, the acceleration response can be improved or fuel efficiency can be improved while maintaining a natural deceleration feeling.

Because the exhaust amount of the variable capacity type compressor is changed with a change of the transmission gear ratio, the torque between the internal combustion engine and the driving wheel can be suppressed while controlling the speed of the internal combustion engine at a quite high speed. As a result, it is possible to prevent a sense of discomfort such as a sudden excessive brake force.

This invention provides an integrated control apparatus of a vehicle including an internal combustion engine and a continuously variable transmission in which a driving power transmission system containing the continuously variable transmission for transmitting a driving power outputted by the internal combustion engine to a driving wheel is coupled on an output side of the internal combustion engine capable of changing an opening/closing timing of an intake valve. The integrated control apparatus comprises intake valve closing timing control means (steps S4, S5) for changing a valve closing timing of the intake valve accompanied by a change of the transmission gear ratio set up by the continuously variable transmission. Consequently, a sudden braking force, which is generated by increasing a transmission gear ratio at the time of deceleration is prevented.

## Claims

1. An integrated control apparatus of a vehicle including an internal combustion engine (1) and a driving power transmission system (2) including a continuously variable transmission (5) for transmitting a driving power outputted by said internal combustion engine (1) to a driving wheel (7), the integrated control apparatus being capable of changing an opening/closing timing of an intake valve (12) opening/closing an intake port (10) of a cylinder (8) of said internal combustion engine (1) and being
**characterized by**:
comprising intake valve closing timing control means (S4, S5) for changing a valve closing timing of said intake valve in accordance with a change of the transmission gear ratio of said continuously variable transmission (5); and wherein
said driving power transmission system (2) comprises a lock-up clutch (3) for selectively coupling an input side member of a fluid transmission mechanism to an output side member thereof, and said intake valve closing timing control means (S4, S5) changes a valve closing timing of said intake valve so that suction air amount into said cylinder of the internal combustion engine is decreased when the vehicle is in a decelerating state with said lock-up clutch (3) engaged and a supply of fuel to said internal combustion engine (1) is stopped.

2. The apparatus according to claim 1, **characterized in that**:
when the valve closing timing is set after a bottom dead center, said intake valve closing timing control means delays the valve closing timing corresponding to an increase of the transmission gear ratio.

3. The apparatus according to claim 1, **characterized in that**:
when the valve closing timing is set before a bottom dead center, said intake valve closing timing control means hastens the valve closing timing corresponding to an increase of the transmission gear ratio.

4. The apparatus according to claim 1 , **characterized in that** said vehicle further comprises operating members (23, 24) for receiving a torque of said internal combustion engine, and said integrated control apparatus further comprises torque adjusting means (S11 to S15, S22 to S25) for changing the torque which operating members (23, 24) receive from said internal combustion engine (1) in accordance with a change of a transmission gear ratio of said continuously variable transmission (5).

5. The apparatus according to claim 4,**characterized in that**:
said operating member includes a variable capacity compressor (23), and
said torque adjusting means (S11 to S15, S22 to S25) changes an exhaust amount of the variable capacity compressor in accordance with a change of said transmission gear ratio.

6. The apparatus according to claim 4 or 5, **characterized in that**:
when said transmission gear ratio is changed so as to reduce the engine speed of the internal combustion engine, said torque adjusting means increases the torque.

7. The apparatus according to any one of claims 4 to 6, **characterized in that**:
said torque adjusting means changes the torque when a supply of fuel to said internal combustion engine is stopped.

## Patentansprüche

1. Eine integrierte Steuervorrichtung eines Fahrzeugs, das einen Verbrennungsmotor (1) und ein Getriebesystem (2) hat, das ein stufenloses Getriebe (5) zum Übertragen einer Antriebsleistung, die durch den Verbrennungsmotor (1) ausgegeben wird, zu einem Antriebsrad (7) hat, wobei die integrierte Steuervorrichtung dazu imstande ist, eine Öffnungs-/Schließzeit eines Ansaugventils (12) zu ändern, das einen Ansaugkanal (10) eines Zylinders (8) des Verbrennungsmotors (1) öffnet/schließt, dabei ist die integrierte Steuervorrichtung **gekennzeichnet durch**:
das Aufweisen einer Ansaugventil-Schließzeitsteuereinrichtung (S4, S5) zum Ändern einer Ventilschließzeit des Ansaugventils gemäß einer Änderung des Übersetzungsverhältnisses des stufenloses Getriebes (5); und wobei
das Getriebesystem (2) eine Sperrkupplung (3) zum wahlweisen Koppeln eines Eingangsseitenbauteils eines Fluidübertragungsmechanismus mit einem Ausgangsseitenbauteil davon aufweist, wobei die Ansaugventil-Schließzeitsteuereinrichtung (S4, S5) eine Ventilschließzeit des Ansaugventils derart ändert, dass eine Ansaugluftmenge in den Zylinder des Verbrennungsmotors verringert wird, wenn das Fahrzeug in einem Verzögerungszustand mit der Sperrkupplung (3) in Eingriff stehend ist und eine Zufuhr von Kraftstoff zu dem Verbrennungsmotor (1) angehalten wird.

2. Die Vorrichtung gemäß Anspruch 1, **dadurch gekennzeichnet, dass**
die Ansaugventil-Schließzeitsteuereinrichtung die Ventilschließzeit entsprechend einem Anstieg des Übersetzungsverhältnisses verzögert, wenn die Ventilschließzeit nach einem unterem Totpunkt festgelegt ist.

3. Die Vorrichtung gemäß Anspruch 1, **dadurch gekennzeichnet, dass**
die Ansaugventil-Schließzeitsteuereinrichtung die Ventilschließzeit entsprechend einem Anstieg des Übersetzungsverhältnisses vorsetzt, wenn die Ventilschließzeit vor einem unteren Totpunkt festgelegt ist.

4. Die Vorrichtung gemäß Anspruch 1, **dadurch gekennzeichnet, dass**
das Fahrzeug weiter Betätigungsbauteile (23, 24) zum Aufnehmen eines Moments des Verbrennungsmotors aufweist und die integrierte Steuervorrichtung weiter eine Momenteneinstelleinrichtung (S11 bis S15, S22 bis S25) zum Ändern des Moments, das die Betätigungsbauteile (23, 24) von dem Verbrennungsmotor (1) aufnehmen, gemäß einer Änderung eines Übersetzungsverhältnisses des stufenlosen Getriebes (5) aufweist.

5. Die Vorrichtung gemäß Anspruch 4, **dadurch gekennzeichnet, dass**
das Betätigungsbauteil einen Kompressor mit variablem Leistungsvermögen (23) hat, und
die Momenteneinstelleinrichtung (S11 bis S15, S22 bis S25) eine Auslassmenge des Kompressors mit variablem Leistungsvermögen gemäß einer Änderung des Übersetzungsverhältnisses ändert.

6. Die Vorrichtung gemäß Anspruch 4 oder 5, **dadurch gekennzeichnet, dass**
die Momenteneinstelleinrichtung das Moment erhöht, wenn das Übersetzungsverhältnis derart geändert wird, dass die Motordrehzahl des Verbrennungsmotors verringert ist.

7. Die Vorrichtung gemäß einem der Ansprüche 4 bis 6, **dadurch gekennzeichnet, dass**
die Momenteneinstelleinrichtung das Moment ändert, wenn eine Zufuhr von Kraftstoff zu dem Verbrennungsmotor angehalten ist.

## Revendications

1. Dispositif de commande intégré d'un véhicule comprenant un moteur à combustion interne (1) et un système (2) de transmission de la force motrice comprenant une transmission (5) à variation continue pour transmettre une puissance motrice délivrée par ledit moteur (1) à combustion interne à une roue motrice (7), le dispositif de commande intégré étant capable de changer une synchronisation de l'ouverture et de la fermeture d'une soupape (12) d'admission ouvrant/fermant un orifice (10) d'admission d'un cylindre (8) dudit moteur (1) à combustion interne et comportant les caractéristiques suivantes :
il comprend un moyen (S4, S5) de commande de la synchronisation de fermeture d'une soupape d'admission pour changer la synchronisation de fermeture d'une soupape de ladite soupape d'admission conformément à un changement du rapport de démultiplication de la boîte de vitesses de ladite transmission (5) à variation continue ; et dans lequel
ledit système (2) de transmission de la force motrice comprend un embrayage (3) de verrouillage destiné à coupler de manière sélective une pièce latérale d'entrée d'un mécanisme de transmission de fluide vers une pièce latérale de sortie de celui-ci et ledit moyen (S4, S5) de commande de la synchronisation de fermeture de la soupape d'admission modifie une synchronisation de la fermeture de soupape de ladite soupape d'admission afin de faire baisser la quantité d'air d'aspiration dans ledit cylindre du moteur à combustion interne lorsque le véhicule est dans un état de décélération à l'aide dudit embrayage (3) de verrouillage en prise et d'arrêter l'apport d'une quantité de carburant dans ce moteur (1) à combustion interne.

2. Dispositif selon la revendication 1, **caractérisé en ce que** :
lorsque la synchronisation de fermeture de la soupape est réglée après un point mort bas, ledit moyen de commande de la synchronisation de la fermeture de la soupape d'admission retarde la synchronisation de fermeture de la soupape correspondant à une augmentation du rapport de démultiplication de la boîte de vitesses.

3. Dispositif selon la revendication 1, **caractérisé en ce que** :
lorsque la synchronisation de fermeture de la soupape est réglée avant un point mort bas, ledit moyen de commande de la synchronisation de la fermeture de la soupape d'admission accélère la synchronisation de la fermeture de la soupape correspondant à une augmentation du rapport de démultiplication de la boîte de vitesses.

4. Appareil selon la revendication 1, **caractérisé en ce que** ledit véhicule comprend en outre des pièces de fonctionnement (23, 24) destinées à recevoir un couple dudit moteur à combustion interne, et **en ce que** ledit dispositif de commande intégré comprend en outre le moyen de réglage (S11 à S15, S22 à S25) de couple pour modifier le couple que les pièces de fonctionnement (23, 24) reçoivent dudit moteur (1) à combustion interne conformément à un changement d'un rapport de démultiplication de la boîte de vitesses de ladite transmission (5) à variation continue.

5. Dispositif selon la revendication 4, **caractérisé en ce que** :
ladite pièces de fonctionnement comporte un compresseur (23) à cylindrée variable, et
ledit moyen (S11 à S15, S22 à S25) de réglage de couple modifie une quantité de flux d'échappement du compresseur à cylindrée variable conformément à un changement dudit rapport de démultiplication de la boîte de vitesses.

6. Dispositif selon la revendication 4 ou 5, **caractérisé en ce que** :
lorsque ledit rapport de démultiplication de la boîte de vitesses est modifié de façon à réduire le régime du moteur du moteur à combustion interne, ledit moyen de réglage de couple augmente le couple.

7. Dispositif selon l'une quelconque des revendications 4 à 6, **caractérisé en ce que** :
ledit moyen de réglage de couple modifie le couple lorsqu'un apport de carburant audit moteur à combustion interne est arrêté.
